# EUROPEAN PATENT APPLICATION

(11) **EP 1 403 308 A1**
(43) Date of publication of application: **31.03.2004**
(21) Application number: 02079034.1
(22) Date of filing: 30.09.2002
(51) Int. Cl.: C08K 5/3492, C08K 3/22, C09K 21/00, C08K 7/14

(54) **Flame retardant composition comprising a melamine component, process for preparing the same, polymer composition comprising a flame retardant composition, process for preparing the same, molded part and assembled article**

(71) Applicant: DSM IP Assets B.V., 6411 TE Heerlen (NL)
(72) Inventor: Gelissen, Franciscus Wilhelmus Maria, 525538 Gangelt (DE); Van Duijnhoven, Frank, 5704 AT Helmond (NL)
(74) Representative: Krijgsman, Willem

(57) **Abstract**

The invention relates to a flame retardant composition comprising a melamine component chosen from the group consisting of melamine, condensation products of melamine, and mixtures thereof, characterized in that the melamine component has been contacted with an alkaline solution of a metal oxide in which the metal is chosen from the group consisting of silicium, zirconium and titanium. This flame retardant composition shows less sublimation during preparation by compounding of flame retarded polymer compositions, thereby giving less pollution of the compounding room compared to a melamine component as such. A further advantage of the flame retardant composition according to the invention is easier dosing and better dispersing during compounding. Injection molding of flame retarded polymer compositions comprising the flame retardant according to the invention, where applicable, results in a reduced tendency to form mold deposits, thereby reducing the number of molded parts with surface defects and reducing the process hold-up time needed for cleaning.

The invention also relates to a process for preparing a flame retardant composition according to the invention, a polymer composition comprising such a flame retardant composition, a process for preparing the same, a molded part and an assembled article prepared from a polymer composition comprising a flame retardant composition according to the invention.

## Description

The invention relates to a flame retardant composition comprising a melamine component chosen from the group consisting of melamine, condensation products of melamine and mixtures thereof.

Such a flame retardant composition is known from WO96/16948, which relates to the use of melamine, melam or higher condensation products of melamine such as melem, melon and methone, as a flame retardant in polymer compositions. As reported in WO96/16948, use of melamine as a flame retardant is not without problems. Melamine sublimes extensively at the elevated temperatures necessary during compounding of the polymer compositions and melamine also tends to form mold deposits during injection molding of such melamine-filled polymer compositions. The melamine condensation products are reported not to sublime as extensively as melamine and to tend not to form mold deposits during injection molding of polymer compositions comprising the condensation products. However, melam and higher condensation product of melamine such as melem, melon and methone they still show an unwanted degree of sublimation and/or decomposition during compounding.

The aim of the invention is to further reduce the problems of flame retardants comprising a melamine component chosen from the group consisting of melamine, condensation products of melamine and mixtures thereof and to provide a flame retardant composition, which shows less sublimation during compounding and, where applicable, shows a reduced tendency to form mold deposits during injection molding of polymer compositions comprising the melamine based flame retardant.

This aim is achieved with a flame retardant composition comprising a melamine component contacted with an alkaline solution of a metal oxide in which themetal is chosen from the group consisting of silicium, zirconium and titanium.

The flame retardant composition according to the invention shows less sublimation during preparation by compounding of flame retarded polymer compositions, thereby giving less pollution of the compounding room. The flame retardant composition according to the invention allows easier dosing and better dispersing during compounding compared to a melamine component as such. A further advantage is that injection molding of polymer compositions comprising the flame retardant according to the invention, where applicable, results in a reduced tendency to form mold deposits, thereby reducing the number of molded parts with surface defects and reducing the process hold-up time needed for cleaning.

In the rest of this document, a condensation product of melamine is understood to consist of a compound chosen from the group consisting of melam, higher condensation products of melamine such as melem, melon and methone, and condensation products of melamine with cyanuric acid, known as melamine cyanurate.

Preferably, the melamine component in the flame retardant composition according to the invention is melamine or melamine cyanurate. This has the advantage of a significant improvement in compoundability, since untreated melamine and melamine cyanurate give extensive problems in compounding with high melting polymers. Such polymers typically have melting points above 250°C. The effect is in particular pronounced with polymers having a melting temperature above 280°C, which polymers require even higher compounding temperatures.

More preferably, the melamine component is melamine. Due to a reduced loss of melamine by sublimation, flame retarded polymer compounds can be prepared with less flame retardant for obtaining the required flame retardancy level compared with compounds in which untreated melamine is used as the flame retardant composition. Also the flame retardant composition according to the invention tends to agglomerate less during compounding and molding of polymer compounds comprising the flame retardant than corresponding compounds comprising melamine. A further advantage is that a conversion step of melamine into a melamine condensation product can be eliminated.

The flame retardant composition according to the invention generally comprises a melamine component and a glass of a metal oxide, of which the metal is chosen from the group consisting of silicium, zirconium and titanium, and an alkali metal oxid, likewise with the glass adhered to the melamine component. The glass is typically represented by the general formula (MOₓ)_{y}.(A₂O), wherein M is the metal chosen from the group consisting of silicium, zirconium and titanium, x is the oxygen content in the metal oxide, A represents an alkali metal chosen from lithium, potassium and/or sodium and y represents the molar ratio of MOₓ: A₂O.

Preferably, the flame retardant composition is prepared from an alkaline solution of silicium oxide. The flame retardant comprises a silicate glass, typically identified by the general formula (SiO₂)_{y}.(A₂O), wherein A is lithium, sodium or potassium. More preferably, the alkaline solution of silicium oxide is a sodium or potassium silicate solution. The advantage is that solutions are commercially available and can readily be used for preparing the flame retardant composition according to the invention.

The chemical composition of the alkaline silicate solution can vary widely. Fusing lithium carbonate, sodium carbonate or potassium carbonate and a silica sand at high temperatures produces respectively a lithium silicate, a sodium silicate, or a potassium silicate in the form of an amorphous glass. The amorphous glass can be dissolved in water, using high pressure and temperature, to give an aqueous silicate solution. The thus obtained solutions are alkaline, and are more alkaline the higher the lithium, sodium and/or potassium content.

The higher the SiO₂ content, relative to the alkali metal content, in the alkaline solution, the higher the melting point of the resulting glass. Preferably the composition of the alkaline solution is chosen in such a way that the SiO₂ : A₂O molar ratio y of the glass is between 1.6 and 3.4 and the melting point of the resulting glass is below 700°C. More preferably, the melting point is between 350°C and 500°C. This has the advantage that the flame retardant composition is effective also at lower temperature.

The higher the alkali metal content, relative to the SiO₂ content in the alkaline solution, the more sensitive the resulting silicate glass is for water. Therefore, the SiO₂: A₂O molar ratio y of the glass is preferably above 2.0. This has the advantage that the water sensitivity of the flame retardant composition is kept within acceptable limits.

In a preferred mode of the invention, the flame retardant composition comprises a silicate glass that has been contacted with an acid solution. This has the advantage that the water sensitivity of the flame retardant composition is reduced, in particular at low pH. Suitable acids are e.g. citric acid, acetic acid, sulfuric acid and hydrochloric acid. Preferably citric acid, acetic acid, sulfuric acid or another halogen-free acid is applied. This has the advantage that the flame retardant composition remains halogen-free.

In another preferred mode, the flame retardant composition comprises a silicate glass comprising magnesium, aluminum and/or calcium. Such a flame retardant composition can be obtained, for example, by first treating a flame retardant composition containing a sodium or potassium silicate with an acid solution, followed by an ion exchange step using a solution containing magnesium, aluminum and/or calcium ions. The two steps (c) and (d) may also be combined. The advantage of a flame retardant composition comprising a silicate glass comprising magnesium, aluminum and/or calcium is that the flame retardant composition is even less water sensitive and remains free flowing even under humid conditions. Another advantage is that the melting point of the glass is higher, resulting in a more thermally stable flame retardant.

Likewise, the flame retardant composition comprises the magnesium, aluminum and/or calcium in the form of an oxide. More preferably, the flame retardant composition comprises a glass in which the molar ratio of the oxide of magnesium, aluminum and/or calcium to the silicium oxide in the glass is at least 0.5. This has the advantage that the water sensitivity is even further reduced.

In a further preferred embodiment of the invention, the flame retardant composition consists of (a) 30 - 95 weight % of a melamine component, (b) 5 - 70 weight % of a silicate glass and (c) 0 - 5 weight % of other additives, with (a) + (b) + (c) = 100%. This composition has the advantage that an optimal result is obtained in reduction of sublimation of the flame retardant composition in combination with a high content of melamine component in the flame retardant. More preferably, the content of the melamine component is 40-90 weight % and the content of the silicate glass is 10-60%, even more preferably the content is respectively 40-80 weight % for the melamine component and 20-60 weight % for the silicate glass.

The invention also relates to a process for preparing a flame retardant composition comprising a melamine component chosen from the group consisting of melamine, condensation products of melamine and mixtures thereof, which process comprises (a) a step wherein the melamine component is contacted with an alkaline solution of a metal oxide wherein the metal is chosen from the group consisting of silicium, zirconium and titanium and (b) a drying step.

The process results in a flame retardant composition according to the invention with the advantages reported above.

The process of the invention can, for example, be carried out by wetting a melamine component with said alkaline solution of the metal oxide followed by drying of the wetted melamine component. Suitable methods for wetting the melamine component, are, for example, spraying the solution over a fluidized bed of particles of the melamine component, tumbling the melamine component in a container containing the alkaline solution, and suspending or dispersing the melamine component in the alkaline solution of the metal oxide.

Another way to carry out the process of the invention is, for example, by first preparing a dispersion or suspension of the melamine component in the alkaline solution and than slowly reducing the pH of the solution, for example by addition of an acid solution, thereby reducing the solubility of the glass which deposits on the suspended particles of the melamine component. This method is also known as coacervation technique.

Suitable methods for drying the wetted melamine component oxide are, for example, drying in a fluidized bed, drying in a tumble dryer, and by spray drying. Drying can be done by using an air stream, preferably hot and/or dry air.

Preferably, drying is done by spray drying, since this gives the lowest risk of caking of particles of the flame retardant.

Preferably, the process according to the invention comprises a step (a) wherein a dispersion of the melamine component in the alkaline solution is prepared. The advantage is that a flame retardant composition showing less sublimation at elevated temperature can be obtained with a lower amount of metal oxide.

For the preparation of the dispersion, surfactants can be used. Suitable surfactants are anionic and nonionic surfactants. Examples of suitable anionic surfactants are alkylbenzene sulfonic acids, for example dodecylbenzene sulfonic acid and paratoluene sulfonic acid, and alkyl carboxylic acids, for example stearic acid. Suitable anionic surfactants are, for example, ethoxylated alkyl alcohols and ethoxylated alkylphenols. A suitable ethoxylated alkylphenol is, for example, nonylphenolpolyethylene glycol. Preferably, the surfactant is a nonionic surfactant. The advantage of a nonionic surfactant is that the dispersion is less sensitive to pH variations during preparation of the flame retardant.

The surfactant is preferably used in an amount of 0 - 5 wt.% relative to the melamine component.

In a preferred mode of the process, the alkaline solution comprises metal oxide wherein the metal is silicium. More preferably, the alkaline solution is a solution of a sodium silicate or a potassium silicate. Even more preferably, the silicate is sodium silicate.

In another preferred mode of the invention, the process comprises a coacervation step (c), wherein the flame retardant, after being contacted with the alkaline metal oxide solution (step a), is contacted with an acid solution.

In a further preferred embodiment of the invention, the process comprises an ion exchange step (d) wherein alkali metal atoms are at least partially exchanged by magnesium, aluminum and/or calcium atoms.

Such a process comprises, for example, a step wherein, after a dispersion of the melamine component in the alkaline solution is made, a solution containing magnesium, aluminum and/or calcium ions is added. This results in formation of an insoluble glass containing magnesium, aluminum and/or calcium, which glass forms a sediment on the dispersed melamine component.

In a more preferred mode, the process comprises a coacervation step (c) followed by a ion exchange step (d) wherein the flame retardant composition obtained from step (c) is subjected to an ion exchange step using a solution containing magnesium, aluminum and/or calcium ions. This has the advantage that there is better control over the magnesium, aluminum and/or calcium content in the resulting flame retardant.

In yet a further preferred embodiment of the process according to the invention, the melamine component is melamine or melamine cyanurate, more preferable melamine.

The invention also relates to a process for preparing a polymer composition comprising a compounding step of at least a polymer and a flame retardant composition according to the invention. This process shows less sublimation, thereby reducing pollution of the compounding room, compared to the process wherein melamine, or a condensation thereof is used without prior treatment as according to the invention. Also dosing of the flame retardant composition during compounding is easier.

Polymers that can be used in the process according to the invention are, for example, polyamides, polycarbonates, polyesters and coplyetheresters.

The effect of reduced sublimation is more evident with polymers having a high melting point. Such polymers typically have melting points above 250°C, and require higher compounding temperatures. This effect is even more pronounced in a compounding process with polymers having even higher melting points, for which the required compounding temperatures even prevent the preparation of suitable compounds when melamine as such is used as the flame retardant.

Suitable polymers having such high melting temperatures, that can be used in the process according to the invention are, for example, polyamide 6, polyamide-6,6, polyamide-4,6 and. In a preferred mode of the process, the flame retardant composition comprises melamine or melamine cyanurate. An advantage is a significant improvement in compoundability compared with a process comprising a compounding step of at least a polymer and flame retardant composition comprising a non-treated melamine or melamine cyanurate. More preferably, the melamine component in the flame retardant composition is melamine. Due to a reduced loss of melamine by sublimation, polymer compositions can be prepared with less melamine for obtaining the required flame retardancy level.

The advantages of the flame retardant composition according to the invention as described above are not only manifest in compounding of polymer compositions comprising at least a polymer and a flame retardant composition according to the invention, but also in molding processes of these polymer compositions for preparing molded parts.

The invention hence further relates to a polymer composition comprising at least a polymer and a flame retardant composition according to the invention as well as to the use of such a polymer composition in a molding process for preparing a molded part. The invention also relates to a molded part obtainable from a polymer composition comprising at least a polymer and a flame retardant composition according to the invention.

The molding process of a polymer composition according to the invention shows a reduced tendency to form mold deposits. Less process hold-up time is needed for cleaning, thereby resulting in a more economically favorable process. Also the number of molded parts with surface defects is lower and fewer parts have to be rejected. The effects are more evident in a molding processes of a polymer composition comprising melamine or melamine cyanurate and a high melting polymer, in particular polymers having a melting temperature above 280°C, which polymers require even higher compounding temperatures.

The invention also relates to an assembled article comprising a molded part obtainable from a polymer composition according to the invention. This article has the advantage that it can be made from a molded part, which is obtainable by an economically more favorable process.

The invention is further illustrated by the examples described below.

| Materials | |
|---|---|
| Sodium silicate I | type Ineos 079: (ex Ineos Silicas, Eijsden, NL) about 38 weight % sodium silicate in water, weight ratio Na₂O:SiO₂ = 1: 3.3 |
| Sodium silicate II | type Ineos 140 (ex Ineos Silicas, Eijsden, NL) about 53 weight % sodium silicate in water, weight ratio Na₂O:SiO₂ = 1: 2.0 |
| Polyamide-6: | type K122 (ex DSM, NL) |
| Melamine : | type DSM Ultra fine (D99%: max. 50 micron) (ex DSM, NL) |
| Disperbyk® 190 | surfactant (ex BYK Chemie, DE) |
| Hydrochloric acid, 35% aqueous solutions | |
| Calcium chloride CaCl₂ | |

### Preparation of flame retardant composition contacted with a alkaline solution of a silicium oxide

### Example I: Sodium silicate glass / melamine 1/1,5

With a Dispermat ® apparatus (rotation speed/min 10000) 22,1 g of melamine was suspended in 360 g of a solution of 30 g sodium silicate Ineos Silica 140 and 6 g Disperbyk 190 in 324 g water. After suspending, the water glass was precipitated on the melamine particles by drop-wise addition of an acidic solution. The thus obtained suspension of glass-coated melamine was spray dried in a Buchy B191 apparatus. The resulting product comprised 60 wt.% melamine and 40 wt.% sodium silicate glass.

### Example II: Calcium silicate glass / melamine 1/1,5

With a Dispermat ® apparatus (rotation speed/min 10000) 22,1 g of melamine was suspended in 360 g of a solution of 30 g sodium silicate Ineos Silicas 140 and 6 g Disperbyk 190 in 324 g water. After suspending, the water glass was precipitated on the melamine particles by drop-wise addition of calcium chloride in water. The thus obtained suspension of glass-coated melamine was spray dried in a Buchy B191 apparatus. The resulting product comprised 60 wt.% melamine and 40 wt.% calcium silicate glass.

### Example III: Sodium silicate glass / melamine 1/1,5

With a Dispermat ® apparatus (rotation speed/min 10000) 20 g of melamine was suspended in 360 g of a solution of 35 g sodium silicate Ineos Silicas 079 and 6 g Disperbyk 190 in 309 g water. After suspending, the water glass was precipitated on the melamine particles by drop-wise addition of an acidic solution. The thus obtained suspension of glass-coated melamine was spray dried in a Buchy B191 apparatus. The resulting product comprised 60 wt.% melamine and 40 wt.% sodium silicate glass.

### Example IV Calcium glass / melamine 1/1,5

With a Dispermat ® apparatus (rotation speed/min 10000) 20 g of melamine was suspended in 360 g of a solution of 35 g sodium silicate Ineos Silicas 079 and 6 g Disperbyk 190 in 309 g water. After suspending, the water glass was precipitated on the melamine particles by drop-wise addition of calcium chloride in water. The thus obtained suspension of glass-coated melamine was spray dried in a Buchy B191 apparatus. The resulting product comprised 60 wt.% melamine and 40 wt.% Calcium silicate glass.

### Hot stage experiments.

### Example V

1 mg of the product of Example I was put in a hot stage microscope, type LINKAM FTIR 600. The temperature in the microscope was raised with a ramp of 10 °C/min. Microscopic pictures were taken at different temperatures.

### Comparative Experiment A

1 mg melamine was put in a hot stage microscope, type LINKAM FTIR 600 The temperature in the microscope was raised with a ramp of 10 °C/min. Microscopic pictures were taken at different temperatures.

Inspection of microscopic pictures taken at different temperatures showed that untreated melamine sublimes already at relative low temperature and has completely sublimed at 200 °C, whereas the flame retardant composition of Example I, consisting of melamine contacted with sodium silicate, is much more stable and significant residues had still remained at 300 °C.

### Compounding.

### Example VI

1,25 g of the product of Example I and 4,5 g polyamide-6 (K122) were compounded in a 5cc Mini Extruder (type 5cc, ex DSM) apparatus under the following conditions: temperature of the extruder house 260 °C, rotation speed 120 RPM, mixing time 240 sec, applied maximum force 50 N. From the resulting compound test-bars were prepared by injection molding in a mini-injection molding apparatus (type mini, ex DSM) at a temperature of 260 °C. The further conditions used were: temperature of the mould: 150 °C; heating time 60 sec, cooling time 10 sec, injection power 7 bar and shot volume 2.5 g

### Example VII-IX

Example VI was repeated, except that instead of the product of Example I, the product of Example II, III, respectively IV was used.

### Comparative Experiment B

Example VI was repeated, except that instead of the product of Example I, melamine was used.

With Examples VI-IX no sublimation occurred, no deposit on the mould was observed and test bars were obtained in which the flame retardant composition was well dispersed. With Comparative Experiment B, sublimation and deposition occurred and dispersion of the flame retardant composition was bad.

### Scanning Electron Microscopy and light microscopy

The test bars of Example VIII And Comparative Experiment B were inspected with Scanning Electron Microscopy using a Philips CP SEM XL 30, with the backscattered electrons detected by a Everhardt-Thornley detector (-150 V) combined with a EDAX Phoenix system and a acceleration voltage of 10 kV. The bars were inspected with EDAX with the observed particles contained silicium.

In the test bars of Example VIII It was observed that silicium was present in all particles. Primary particles of 4 to 15 µm and agglomerates up to 40 µm were observed.

In the test bars of Comparative Experiment B logically no silicium was present. In these bars less primary particles and more agglomerates were observed. These results are interpreted in that the flame retardant composition according to the invention, comprising melamine treated with a sodium silicate solution, shows a reduced tendency to agglomeration than melamine.

## Claims

1. Flame retardant composition comprising a melamine component chosen from the group consisting of melamine, condensation products of melamine, and mixtures thereof, **characterized in that** the melamine component has been contacted with an alkaline solution of a metal oxide in which the metal is chosen from the group consisting of silicium, zirconium and titanium

2. Flame retardant composition according to claim 1, wherein the melamine component is melamine or melamine cyanurate.

3. Flame retardant composition according to claim 1 or claim 2, wherein the metal is silicium.

4. Flame retardant composition according to any of claims 1-3, wherein the flame retardant composition consists of
(a) 30 - 95 weight % of a melamine component,
(b) 5 - 70 weight % of a glass of a silicate glass and
(c) 0 - 5 weight % of other additives,
with (a) + (b) + (c) = 100%.

5. Process for preparing a flame retardant composition comprising a melamine component chosen from the group consisting of melamine, condensation products of melamine, and mixtures thereof, **characterized in that** the process comprises (a) a stepwherein the melamine component is contacted with an alkaline solution of a metal oxide in which the metal is chosen from the group consisting of silicium, zirconium and titanium and (b) a drying step.

6. Process according to claim 5, wherein step (a) comprises preparing a dispersion of the melamine component in the alkaline solution.

7. Process according to any of claims 5-6, wherein the metal is silicium.

8. Process according to any of claims 5-7, comprising a coacervation step (c) wherein the flame retardant after step (a) is contacted with an acid solution.

9. Process according to any of claims 5-8, comprising a step (d) wherein alkali metal atoms are at least partially exchanged by magnesium, aluminum and/or calcium atoms.

10. Process according to any of claims 5 to 9, wherein the melamine component is melamine or melamine cyanurate.

11. Process for preparing a polymer composition comprising a compounding step of at least a polymer with a flame retardant composition according to any of claims 1 to 4 or obtainable by the process of any of claims 5 to 10.

12. Process according to claim 11, wherein the polymer has a melting point of at least 250°.

13. Polymer composition comprising at least a polymer and a flame retardant composition according to any of claims 1 to 4 or obtainable by the process of any of claims 5 to 10

14. Process for preparing a molded part, comprising a molding step of a polymer composition according to claim 13.

15. Molded part, obtainable from a polymer composition according to claim 13.

16. Assembled article comprising a molded part according to claim 15.
